# FASCICULE DE BREVET EUROPEEN

(11) **EP 1 075 651 B1**
(45) Date de publication et mention de la délivrance du brevet: **07.07.2004**
(21) Numéro de dépôt: 99916963.4
(22) Date de dépôt: 30.04.1999
(51) Int. Cl.: G01N 21/39

(54) **PROCEDE D'EXCITATION D'UNE CAVITE OPTIQUE POUR LA DETECTION DE GAZ A L'ETAT DE TRACES**
VERFAHREN ZUR ANREGUNG EINES OPTISCHEN RESONATORS ZUM NACHWEIS VON GASSPUREN
METHOD FOR EXCITING AN OPTICAL CAVITY FOR DETECTING GAS TRACES

(30) Priorité: 30.04.1998 FR 9805753
(43) Date de publication de la demande: 14.02.2001
(73) Titulaire: UNIVERSITE JOSEPH FOURIER, 38041 Grenoble Cédex 9 (FR)
(72) Inventeur: ROMANINI, Daniele, F-38000 Grenoble (FR); KATCHANOV, Alexandre, F-38400 Saint Martin d'Hères (FR)
(74) Mandataire: de Beaumont, Michel
(86) Numéro de dépôt international: PCT/FR1999/001030
(87) Numéro de publication internationale: WO 1999/057542

(56) Documents cités:
- US-A- 4 793 709
- US-A- 5 026 991
- US-A- 5 528 040

## Description

La présente invention concerne la détection de gaz à l'état de traces. Elle concerne plus particulièrement le procédé de détection par spectroscopie à mesure de décroissance d'énergie dans une cavité résonance, couramment désigné dans la technique par le sigle CRDS d'après les termes anglo-saxons " Cavity Ring-Down Spectroscopy".

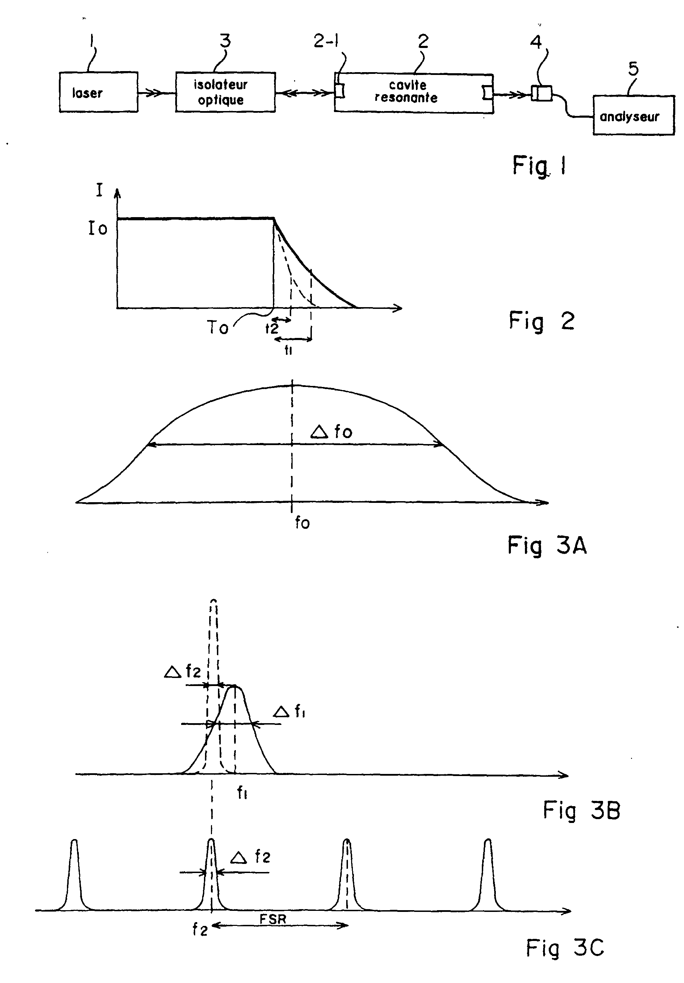

On va rappeler les principes fondamentaux du procédé CRDS en relation avec la figure 1. Le procédé consiste à émettre de la lumière à partir d'un laser 1 dans une cavité optique résonante 2. Un système d'isolation optique ou un déflecteur 3 est utilisé pour éviter des effets en retour de la cavité résonante sur le laser. La lumière sortant de la cavité résonante est reçue par un photodétecteur 4 et est envoyée à un analyseur 5. En supposant que l'on a réussi à injecter des photons dans la cavité 2, une fois que l'injection de photons dans la cavité par le laser est interrompue, par exemple en coupant le laser ou en défléchissant son faisceau, les photons restent piégés dans la cavité et décroissent de façon exponentielle en fonction du temps. Si la cavité est vide, ou pour une longueur d'onde qui ne correspond pas à une raie d'absorption d'un gaz contenu dans la cavité, cette décroissance présentera une certaine constante de temps déterminée essentiellement par les pertes des miroirs à la longueur d'onde considérée. Si la cavité contient une espèce chimique présentant une raie d'absorption à la longueur d'onde des photons injectés, cette constante de temps sera réduite.

Ceci est illustré par la figure 2 qui représente l'intensité recueillie par le photodétecteur 4 en fonction du temps. On suppose qu'à l'instant T0, l'excitation est interrompue et qu'il existe une certaine densité de photons I₀ dans la cavité. Si la cavité ne contient pas d'espèces absorbantes à la fréquence considérée, le taux de décroissance a une première valeur γ1. Si la cavité contient des espèces absorbantes, le taux de décroissance deviendra y2. La concentration des espèces absorbantes dans la cavité est proportionnelle à la différence γ2-γ1.

De nombreuses études et expériences de laboratoire ont été réalisées pour utiliser et mettre au point ce procédé de détection d'espèces gazeuses. On s'est vite aperçu que, pour transformer les expériences de laboratoire en un procédé pouvant être mis en oeuvre par un dispositif industriel à faible coût, il convenait d'utiliser un laser continu.

Les premières expériences sur le procédé CRDS ont été faites avec des lasers à impulsions fournissant des impulsions d'énergie très intenses à relativement large spectre. On pouvait alors injecter suffisamment de photons dans la cavité pour réaliser des mesures. Toutefois, ce procédé se heurtait à un inconvénient fondamental résidant dans la complexité et le coût des lasers à impulsions. D'autre part, on a proposé depuis longtemps (voir D. Z. Anderson et al., Applied Optics, Volume 23, 1984, P. 1238-1245) d'utiliser comme source un laser continu. L'ensemble de ces techniques connues est rappelé en détail dans le brevet américain 5 528 040 de K. K. Lehmann déposé en 1994 qui préconise également l'utilisation d'un laser continu comme source.

Au fur et à mesure que les expérimentations ont progressé, il est apparu que l'un des problèmes fondamentaux à résoudre résidait dans l'injection d'une quantité suffisante de lumière dans la cavité résonante.

Un autre problème qui se pose avec les dispositifs antérieurs réside dans le fait qu'ils sont généralement complexes car ils comportent des systèmes d'asservissement pour fixer la fréquence du laser au moment de l'interruption du couplage laser/cavité.

Ainsi, un objet de la présente invention est de prévoir un procédé de mesure de traces d'une espèce chimique par l'utilisation d'une technique de spectroscopie à cavité résonante dans laquelle on optimise l'injection de photons dans la cavité résonante à partir d'un laser continu.

Un autre objet de la présente invention est de prévoir un procédé qui soit simple à mettre en oeuvre du fait qu'il ne prévoit pas d'asservissement en fréquence du système.

Pour atteindre ces objets, la présente invention prévoit un procédé de détection de gaz à l'état de traces par un laser couplé à une cavité optique résonante contenant une espèce chimique à analyser, comprenant les étapes consistant à prévoir que le couplage entre le laser et la cavité est tel que de la lumière ne soit renvoyée vers le laser que quand la cavité est dans un mode de résonance et à la fréquence de résonance ; prévoir un laser à semiconducteur d'un type propre à fournir une émission amplifiée et affinée sur la fréquence réinjectée, et tel que, quand un créneau de courant lui est appliqué, sa fréquence se déplace d'une fréquence initiale déterminée à une fréquence finale déterminée ; exciter le laser par un premier créneau de courant de façon que la fréquence du laser se verrouille séquentiellement sur des modes successifs de la cavité ; mesurer le temps de décroissance de l'intensité lumineuse dans la cavité à la fin dudit créneau ; et répéter les étapes d'excitation et de mesure pour des créneaux de courant successifs, pour couvrir une plage spectrale à analyser.

Selon un mode de réalisation de la présente invention, le laser est une diode laser.

Selon un mode de réalisation de la présente invention, le laser est excité par des créneaux de courant séquentiels de plus en plus intenses.

Selon un mode de réalisation de la présente invention, le laser est excité par des créneaux de courant séquentiels de plus en plus longs.

Selon un mode de réalisation de la présente invention, le laser est excité par des créneaux de courant séquentiels identiques, la température à laquelle le laser est stabilisé étant incrémentée après chaque créneau.

Selon un mode de réalisation de la présente invention, la cavité est du type en V, comprenant un premier miroir oblique par rapport à la direction d'incidence du laser, un deuxième miroir orthogonal à la direction d'incidence du laser, et un troisième miroir formant cavité avec les deux premiers miroirs.

Selon un mode de réalisation de la présente invention, la cavité est une cavité classique à deux miroirs et dans lequel un isolateur à polarisation est disposé entre le laser et la cavité pour empêcher le retour vers le laser d'une réflexion directe sur la face arrière du miroir d'entrée et pour transmettre vers le laser une radiation ayant subie une résonance dans la cavité.

Selon un mode de réalisation de la présente invention, la cavité est réglée pour fonctionner dans un mode proche d'un mode dégénéré, les modes transverses secondaires étant tous regroupés d'un même côté d'un mode transverse principal correspondant, le laser effectuant un balayage dans le sens partant du côté opposé à celui où se trouvent les modes latéraux secondaires.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente le schéma général d'un dispositif mettant en oeuvre le procédé CRDS ;
la figure 2 représente des courbes d'intensité en fonction du temps caractérisant l'atténuation de photons piégés dans une cavité ;
les figures 3A à 3C représentent des courbes d'intensité spectrale en fonction de la fréquence, respectivement pour une raie d'absorption, pour une raie laser et pour des modes longitudinaux d'une cavité ;
les figures 4A et 4B représentent des courbes caractérisant l'accrochage entre un laser et une cavité ;
la figure 5 représente un mode de réalisation particulier d'un dispositif selon la présente invention ;
la figure 6 représente un autre mode de réalisation particulier d'un dispositif selon la présente invention ; et
les figures 7A à 7D illustrent des modes latéraux pour divers types de cavités.

Avant de décrire la présente invention, la demanderesse tient à rappeler que, dans le domaine de la spectroscopie optique, des termes tels que raie fine, système monomode, etc. ont souvent des acceptions différentes selon les auteurs. On va donc préciser ci-dessous en relation avec les figures 3A à 3C le vocabulaire qui-sera utilisé ici.

De façon générale, dans les techniques de détection d'espèces gazeuses par mesure d'absorption optique, on analyse si une raie d'absorption particulière de l'espèce considérée est présente ou non et l'on cherche à déterminer son intensité.

La figure 3A représente l'intensité d'une raie d'absorption en fonction de la fréquence. La raie a une fréquence centrale f0 et une largeur Δf0. A titre d'exemple, la raie d'absorption à 1651 nm du méthane présente une largeur de raie d'absorption Δf0 = 4,4 GHz (ce qui correspond à une plage de longueur d'onde de 0,04 nm).

Un laser continu tel qu'une diode laser ou autre laser à semiconducteur à fréquence réglable émettra une raie f1 de largeur Δf1 telle que représentée en figure 3B. De façon générale, Δf1 sera nettement inférieure à la largeur Δf0 de la raie d'absorption, et l'on se placera toujours ici dans ce cas.

Par ailleurs, comme l'illustre la figure 3C, une cavité optique résonante de longueur donnée pourra résonner sur l'une ou l'autre de plusieurs fréquences ou modes longitudinaux espacés d'une distance FSR ou intervalle spectral libre. Pour la simplicité de l'exposé on appellera f2 la fréquence d'un mode de la cavité en notant qu'il faudrait parler d'une fréquence f2 + kFSR où k est un entier positif, négatif ou nul. Pour chacun des modes longitudinaux, la largeur de résonance possible Δf2 est très faible, c'est-à-dire petite devant la largeur de la raie laser Δf1 qui est elle-même petite devant la largeur de la raie d'absorption Δf0. On considérera le cas fréquent en pratique où Δf1 est inférieure à la distance FSR entre modes de la cavité. Par exemple, FSR pourra être égale à 300 MHz (environ 10 fois moins que la largeur de la bande d'absorption à étudier).

Comme le représente la figure 3B, l'énergie de la raie laser est répartie sur la largeur Δf1 et seule la partie de cette énergie de largeur Δf2 correspondant à la largeur d'un mode de la cavité pourra être injectée dans la cavité. On voit donc que la quantité de photons injectée dans la cavité est faible devant l'intensité totale d'une raie laser. L'énergie accumulée par la cavité sera donc faible, d'autant plus que l'intensité d'un laser continu de type à diode ou à semiconducteur est généralement faible. En outre, cette intensité sera fluctuante selon le centrage relatif de la fréquence centrale d'émission f1 du laser et de la fréquence d'un mode voisin f2 de la cavité. Or ce que l'on pourra détecter sur le photodétecteur 4 dépend directement du nombre de photons que l'on aura injecté dans la cavité.

Selon une première caractéristique de la présente invention, la cavité résonante est utilisée comme source d'une rétroaction optique positive vers le laser qui est choisi d'un type réagissant fortement à une rétroaction optique.

Pour faire comprendre ce phénomène de rétroaction optique, on rappellera que la cavité résonante pour être efficace du point de vue de la détection de l'absorption doit présenter des miroirs hautement réflecteurs, par exemple des miroirs dont le coefficient de réflexion s'approche de 99,998. Ainsi, quand le laser envoie de la lumière sur le miroir d'entrée 2-1 de la cavité résonante, cette lumière est pour la plus grande partie renvoyée sur le laser. Ceci est susceptible de perturber le laser. C'est pourquoi dans les montages classiques on utilise un isolateur optique entre le laser et la cavité. Dans le cadre de la présente invention, on utilise un montage propre à renvoyer sélectivement sur le laser une bande de longueur d'onde de largeur correspondant à la largeur d'un mode de la cavité pour une fréquence de résonance de la cavité. Si le laser émet de l'énergie autour de la fréquence f1 (figure 3C), et que la raie laser contient de l'énergie à une fréquence f2, la cavité entre en résonance et on ne renvoie sur le laser que les ondes correspondant à cette fréquence de résonance. Si le laser est un laser à forte rétroaction positive, ce qui est le cas par exemple pour les lasers à semiconducteur (et non pas par exemple pour les lasers à colorant ou les lasers à gaz) la raie du laser s'affinera et s'intensifiera sur la largeur de bande renvoyée. Ainsi, le laser, au lieu d'envoyer une raie de largeur à Δf1 centrée sur la fréquence f1, émettra une raie beaucoup plus intense de largeur sensiblement égale à Δf2 centrée sur la fréquence f2 d'un mode de la cavité, comme cela est représenté en pointillés en figure 3B. Ainsi, le laser n'enverra dans la cavité que des photons à la fréquence utile (une fréquence de résonance de la cavité) et l'injection sera beaucoup plus intense. On peut dire que le laser s'asservit sur un mode de la cavité.

Selon une deuxième caractéristique de la présente invention, on utilise un laser, par exemple un laser continu à diode semiconductrice, tel que, quand on l'alimente par un créneau de courant constant, sa longueur d'onde croît progressivement à partir d'une valeur initiale. Plus particulièrement, on choisit un laser stabilisé en température qui, à la fin d'un créneau de courant de durée déterminée est à une fréquence finale déterminée, cette fréquence finale étant fonction de la durée et de l'amplitude du courant, sans qu'il soit nécessaire de prévoir une boucle d'asservissement. Toutefois, comme on l'a indiqué précédemment, étant donné le couplage entre le laser et la cavité, on peut considérer que la fréquence du laser saute successivement de la fréquence d'un mode de la cavité à la fréquence du mode voisin. On choisira bien entendu un réglage initial du laser tel que sa longueur d'onde initiale soit voisine et légèrement inférieure à celle de la bande d'absorption que l'on veut étudier (fréquence voisine et légèrement supérieure).

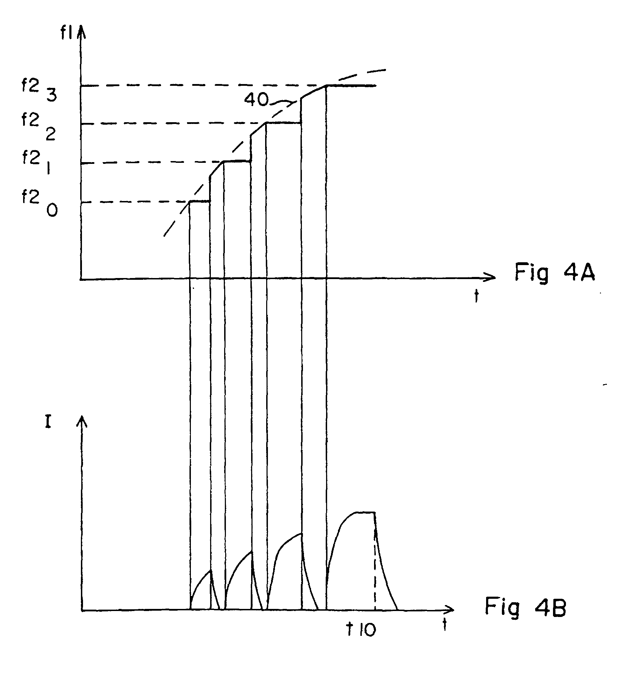

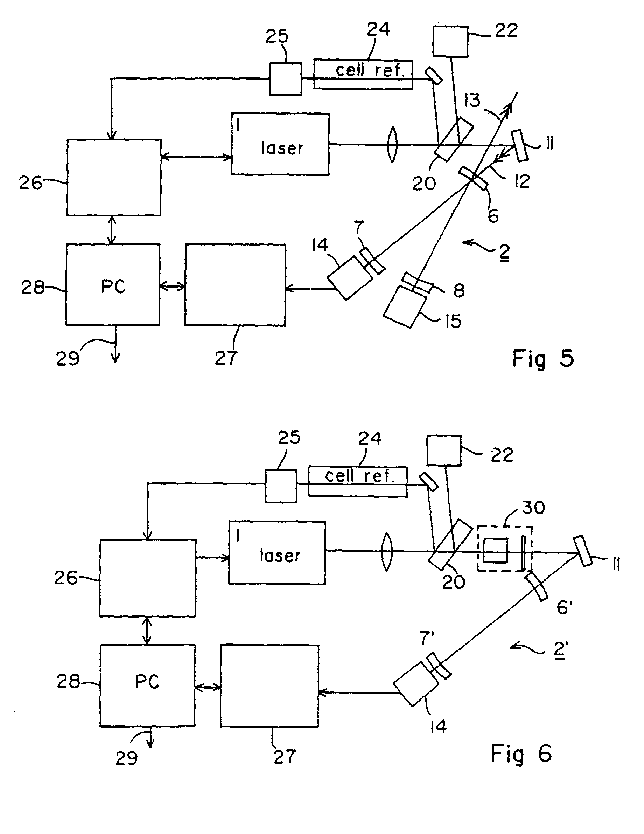

Ainsi, normalement, quand un créneau de courant est appliqué au laser comme le représente la courbe en pointillés 40 de la figure 4A, la longueur d'onde émise par le laser tend à croître progressivement (en figure 4A, f1 désigne une longueur d'onde et non une fréquence). Comme on l'a indiqué, en raison du couplage avec la cavité, pour chacune des fréquences propres ou fréquences des modes longitudinaux de la cavité f2₀, f2₁, f2₂, f2₃, la longueur d'onde du laser aura tendance à se verrouiller sur la fréquence considérée. Ainsi, la transmission de la cavité est sensiblement telle que représentée en figure 6B, c'est-à-dire que la cavité transmet pour chaque fréquence de verrouillage f2₀, f2₁, f2₂, f2₃. Si on interrompt brutalement l'alimentation du laser, à un instant t10, celui-ci cesse d'émettre et on observe le phénomène d'amortissement que l'on cherche à étudier après l'instant t10.

On a ainsi obtenu une mesure pour un point de la bande d'absorption. On pourrait éventuellement répéter plusieurs fois cette mesure. Ensuite, on réeffectuera une mesure par un autre point de la bande d'absorption, en s'assurant que l'interruption du laser est assurée pour un autre mode de la cavité. Ceci peut être assuré par divers moyens, par exemple en augmentant l'intensité du créneau de courant appliqué au laser, en augmentant la durée du créneau, ou encore en modifiant la température du laser pour modifier sa fréquence d'oscillation initiale. On pourra ainsi obtenir une succession de points qui permettent de reconstituer l'allure de la bande d'absorption que l'on veut étudier.

Un avantage de la présente invention réside dans le fait que l'on peut obtenir une très grande stabilité de mesure car on ne modifie pas d'une mesure à l'autre le réglage de la cavité mais on joue seulement sur l'excitation du laser et, comme cela est connu, un laser tel qu'un laser à semiconducteur, par exemple une diode laser, peut être régulé de façon extrêmement fiable. On peut ainsi s'assurer par exemple que des points de mesure sont régulièrement espacés (à un intervalle spectral libre près).

Des exemples de dispositifs mettant en oeuvre l'invention sont illustrés en figures 5 et 6.

En figure 5, le laser est à nouveau désigné par la référence 1. La cavité 2 est une cavité en V comprenant un miroir d'entrée 6 et des miroirs 7 et 8 disposés sensiblement de la façon représentée pour former une cavité résonante. Ainsi, le faisceau direct envoyé par le laser est réfléchi par un miroir 11 vers la face arrière d'un premier miroir 6 et vers un second miroir 7. La lumière réfléchie par le miroir 7 est renvoyée par la face avant du miroir 6 vers un miroir 8. Quand la cavité n'est pas accordée, le faisceau global envoyé par le laser et arrivant sur la face arrière du miroir 6 par un chemin optique 12 est renvoyé selon un faisceau 13 non dirigé en retour vers le laser. Le faisceau direct arrivant sur le miroir 7 est renvoyé sur le miroir 6. Toutefois, son intensité à la sortie du miroir 6 est extrêmement faible puisqu'il subit la double atténuation de transmission du miroir 6 et peut être considérée comme négligeable tant que la cavité 2 n'est pas accordée. L'intensité renvoyée sur le chemin optique 12 devient importante seulement quand la longueur d'onde d'accord de la cavité (f2 en figure 3C) est envoyée par le laser. C'est alors que le phénomène de rétroaction et d'affinement de raie se produit. Une injection maximum se produit alors dans la cavité. En excitant le laser par un créneau de courant de caractéristiques données, on obtient la variation décrite en relation avec les figures 4A et 4B. A la fin du créneau de courant, on pourra analyser la sortie d'un photodétecteur 14 ou 15, disposé par exemple derrière l'un des miroirs 7 ou 8, pour étudier le phénomène de décroissance optique lié à la présence ou à l'absence d'une raie d'absorption d'une espèce recherchée dans la cavité.

En outre, on a représenté en figure 5 divers moyens classiques, connus dans les dispositifs antérieurs. En particulier, on pourra utiliser une séparatrice 20 pour défléchir une première partie du faisceau du laser vers un photodétecteur 22. Une deuxième partie du faisceau du laser pourrait être défléchie vers une cellule de référence 24 contenant l'espèce chimique dont on veut détecter la présence. Cette cellule de référence est associée à un détecteur 25 dont la sortie peut être renvoyée à un système de réglage 26 du laser 1 pour permettre son réglage initial. La sortie du détecteur 14 disposé derrière le miroir 7 est par exemple envoyée à un circuit de numérisation 27 dont la sortie est envoyée à un processeur 28 convenablement programmé, associé à une sortie de fourniture d'information 29 et agissant également sur le balayage du laser pour satisfaire à diverses exigences.

La figure 6 représente à titre d'exemple une variante de réalisation de l'invention dans laquelle de mêmes éléments qu'en figure 5 sont désignés par de mêmes références. Dans ce mode de réalisation, la cavité résonante 2 est une cavité classique constituée de deux miroirs face à face 6' et 7'. L'ensemble de l'énergie envoyée vers la face arrière du miroir 6' est réémise vers le laser 1. Pour éviter cela, on dispose un isolateur optique 30, par exemple un polariseur rectiligne suivi d'une lame quart d'onde entre le laser et la cavité. Toutefois, cet isolateur optique est un isolateur sensible à la polarisation. On suppose que le laser envoie une onde de polarisation donnée et l'onde de polarisation correspondante renvoyée par le miroir 6' est bloquée par l'isolateur 30. Toutefois, quand la cavité 2 entre en résonance, l'onde réémise à la fréquence f2 (voir figure 3C) est dépolarisée par rapport à l'onde initiale incidente et retraverse avec une faible atténuation l'isolateur 30. Elle est donc renvoyée sur le laser 1 et l'effet de rétroaction décrit précédemment se produit et on obtient à nouveau un accord du laser sur la fréquence f2 et un amincissement de la raie d'émission du laser.

Des moyens pour calculer la valeur de la concentration d'un gaz recherché à partir des valeurs des taux de décroissance mesurés en divers points de la raie d'absorption sont connus et ne seront pas décrits ici plus en détail. Les calculs correspondants seront par exemple réalisés par le processeur 28 des figures 5 et 6.

Par ailleurs, de façon connue, la distance entre le laser et la cavité influe sur la réaction. Pour pallier cet effet, on pourra ou bien prévoir un asservissement ou bien faire osciller ce chemin, par exemple par une source de vibration, dans le but d'exciter une séquence continue de modes quand le laser est balayé.

### Influence des modes transverses de la cavité

Dans la description précédente, et plus particulièrement en figure 3C, on a représenté la cavité comme présentant des modes de résonance à des fréquences f2 séparées les unes des autres d'un intervalle égal à l'intervalle spectral libre FSR de la cavité. Il s'agissait là d'une simplification. En effet, une cavité est susceptible de résonner sur plusieurs modes transverses électromagnétiques (TEM), généralement désignés par TEMᵢⱼ. A chacun de ces modes correspond en fait une forme géométrique du spot lumineux sur les miroirs. Ceci signifie dans le cas de ce qui a été décrit précédemment que le laser est susceptible de s'accrocher sur l'un ou l'autre des modes latéraux de la cavité ou sur plusieurs modes simultanément. La relation entre le temps de décroissance en présence d'un gaz et le temps de décroissance en l'absence de gaz est alors moins précise car on ne peut être sûr que ces deux temps de décroissance ont été mesurés pour des mêmes modes latéraux. En effet, pour une cavité donnée, la constante de temps de décroissance dépend quelque peu du mode latéral TEM de la cavité qui a été excitée. Ceci est dû notamment à ce que ces modes correspondent à des formes géométriques distinctes des spots lumineux. Ce ne sont pas les mêmes parties des miroirs qui sont éclairées dans les différents modes latéraux et les temps de décroissance dépendent des petites variations locales, incontrôlables, des pouvoirs réflecteurs des miroirs.

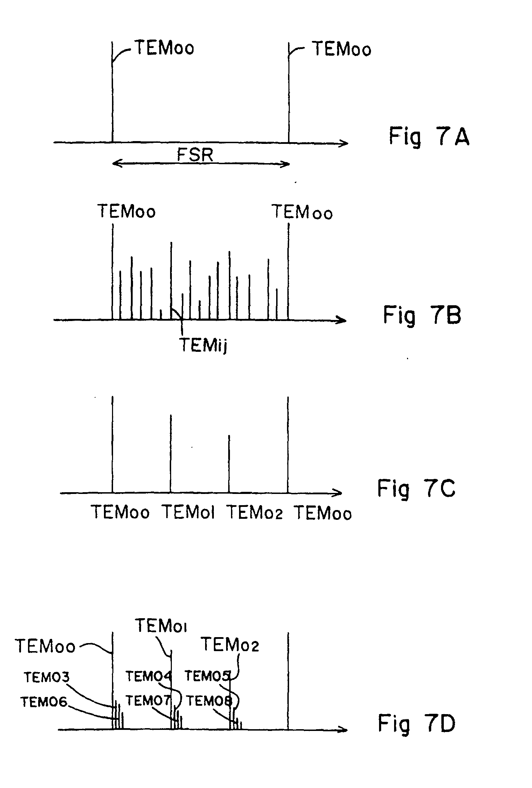

De façon connue et comme cela est illustré en figures 7A et 7D, les positions des divers modes transverses dépendent du diamètre des miroirs d'une cavité et de la distance entre ces miroirs. La figure 7A, qui correspond, de façon plus schématique à la figure 3C représente seulement des modes longitudinaux principaux (TEM₀₀) d'une cavité. Dans un cas quelconque, on a une distribution du type de la figure 7B où de très nombreux modes TEMᵢⱼ peuvent apparaître entre deux modes TEM₀₀ voisins. Il est également connu, comme le représente la figure 7C, que dans le cas d'une cavité dégénérée, c'est-à-dire une cavité dans laquelle la longueur de la cavité présente une relation rationnelle avec le rayon des miroirs, on obtient une cavité dite à mode dégénéré, dans laquelle la plupart des modes se regroupent aux mêmes fréquences. Ainsi, pour une cavité à miroirs identiques dont la longueur est égale à R/2 ou 3R/2 (R étant le rayon des miroirs), tous les modes TEM₀₀ et TEMᵢⱼ tels que i+j =3n se regroupent à la même fréquence, de même que TEM₀₁ et TEMᵢⱼ tels que i+j =3n+1, et que TEM₀₂ et TEMᵢⱼ tels que i+j=3n+2.

Le fonctionnement dans le mode de réalisation de la figure 7B n'est pas satisfaisant parce que l'on ne sait sur quel mode on va s'accrocher. Le fonctionnement sur une configuration dégénérée du type de la figure 7C n'est également pas satisfaisant car plusieurs modes latéraux seront excités simultanément chaque fois que le laser est accroché et leur intensité relative est variable.

Ainsi, selon un aspect de la présente invention, il est préconisé d'utiliser une cavité dans une configuration proche d'une configuration dégénérée, dans laquelle les modes latéraux mineurs seront regroupés au voisinage immédiat et d'un même côté d'un mode TEM principal (TEM₀₀, TEM₀₁ et TEM₀₂ dans le cas considéré). Ainsi, dans le cadre d'une mise en oeuvre de l'invention, quand le laser effectue son balayage, il accrochera nécessairement sur l'un des modes TEM principaux de la cavité. Ensuite, quand il décrochera de ce mode (voir figure 4A), il sera trop éloigné en fréquence de l'un des modes latéraux secondaires immédiatement voisins et ne pourra s'accrocher que sur l'un des modes latéraux principaux suivants.

De plus, l'excitation des modes latéraux secondaires dans la cavité peut, de façon connue, être fortement réduite en réalisant un couplage par des systèmes optiques adéquats entre le laser et la cavité (mode matching).

Bien entendu, la présente invention est susceptible de diverses variantes et modifications qui apparaîtront à l'homme de l'art. En particulier, divers types de cavités, divers systèmes d'asservissement et divers systèmes d'analyse pourront être utilisés.

## Revendications

1. Procédé de détection de gaz à l'état de traces par un laser couplé à une cavité optique résonante contenant une espèce chimique à analyser, **caractérisé en ce qu'**il comprend les étapes suivantes :
prévoir que le couplage entre le laser et la cavité est tel que de la lumière ne soit renvoyée vers le laser que quand la cavité est dans un mode de résonance et à la fréquence de résonance ;
prévoir un laser à semiconducteur d'un type propre à fournir une émission amplifiée et affinée sur la fréquence réinjectée, et tel que, quand un créneau de courant lui est appliqué, sa fréquence se déplace d'une fréquence initiale déterminée à une fréquence finale déterminée ;
exciter le laser par un premier créneau de courant de façon que la fréquence du laser se verrouille séquentiellement sur des modes successifs de la cavité ;
mesurer le temps de décroissance de l'intensité lumineuse dans la cavité à la fin dudit créneau ; et
répéter les étapes d'excitation et de mesure pour des créneaux de courant successifs, pour couvrir une plage spectrale à analyser.

2. Procédé selon la revendication 1, **caractérisé en ce que** le laser est une diode laser.

3. Procédé selon la revendication 1, **caractérisé en ce qu'**il consiste à exciter le laser par des créneaux de courant séquentiels de plus en plus intenses.

4. Procédé selon la revendication 1, **caractérisé en ce qu'**il consiste à exciter le laser par des créneaux de courant séquentiels de plus en plus longs.

5. Procédé selon la revendication 1, **caractérisé en ce qu'**il consiste à exciter le laser par des créneaux de courant séquentiels identiques, la température à laquelle le laser est stabilisé étant incrémentée après chaque créneau.

6. Procédé selon la revendication 1, dans lequel la cavité est du type en V, comprenant un premier miroir (6) oblique par rapport à la direction d'incidence du laser, un deuxième miroir (7) orthogonal à la direction d'incidence du laser, et un troisième miroir (8) formant cavité avec les deux premiers miroirs (6, 7).

7. Procédé selon la revendication 1, dans lequel la cavité est une cavité classique à deux miroirs et dans lequel un isolateur à polarisation est disposé entre le laser et la cavité pour empêcher le retour vers le laser d'une réflexion directe sur la face arrière du miroir d'entrée et pour transmettre vers le laser une radiation ayant subie une résonance dans la cavité.

8. Procédé selon la revendication 1, **caractérisé en ce que** la cavité est réglée pour fonctionner dans un mode proche d'un mode dégénéré, les modes transverses secondaires étant tous regroupés d'un même côté d'un mode transverse principal correspondant, le laser effectuant un balayage dans le sens partant du côté opposé à celui où se trouvent les modes latéraux secondaires.

## Patentansprüche

1. Verfahren zur Detektion bzw. zum Nachweis von Gas im Spurenzustand mittels eines Lasers, der mit einem optischen Hohlraumresonator gekoppelt ist, welcher eine zu analysierende chemische Substanz enthält, ***dadurch gekennzeichnet* , daß** das Verfahren die folgenden Schritte bzw. Stufen umfaßt:
Ausbilden der Kopplung zwischen dem Laser und dem Hohlraum solcher Art, daß Licht zu dem Laser nur zurückgeschickt wird, wenn sich der Hohlraum in einem Resonanzmode befindet und bei der Resonanzfrequenz;
Anordnen eines Halbleiter-Lasers eines Typs, der eine verstärkte und auf die reinjizierte Frequenz eingeengte Emission zu liefern vermag und solcher Art, daß bei Anlegen eines Rechteck-Stromimpulses an den Laser seine Frequenz sich von einer bestimmten Anfangsfrequenz zu einer bestimmten Endfrequenz verschiebt;
Anregen des Lasers mit einem ersten Rechteck-Stromimpuls derart, daß die Frequenz des Lasers sich aufeinanderfolgend auf aufeinanderfolgenden Modes des Hohlraums verriegelt;
Messen der Abklingdauer der Lichtintensität in dem Hohlraum am Ende des genannten Rechteckimpulses; sowie
Wiederholen der Schritte Anregen und Messen für aufeinanderfolgende Rechteckstromimpulse, zum Überdecken bzw. Überstreichen eines zu analysierenden Spektralbereichs.

2. Verfahren nach Anspruch 1, **dadurch gekennzeichnet, daß** der Laser eine Laserdiode ist.

3. Verfahren nach Anspruch 1, **dadurch gekennzeichnet, daß** das Verfahren in der Anregung des Lasers mit aufeinanderfolgenden Rechteckstromimpulsen zunehmender Intensität besteht.

4. Verfahren nach Anspruch 1, **dadurch gekennzeichnet, daß** das Verfahren in der Anregung des Lasers mit aufeinanderfolgenden Rechteck-Stromimpulsen zunehmender Länge besteht.

5. Verfahren nach Anspruch 1, **dadurch gekennzeichnet, daß** es in der Anregung des Lasers mit aufeinanderfolgenden gleichartigen Rechteck-Stromimpulsen besteht, wobei die Temperatur, bei welcher der Laser stabilisiert ist, nach jedem Rechteckimpuls inkrementiert wird.

6. Verfahren nach Anspruch 1, bei welchem der Hohlraum vom V-Typ ist, mit einem bezüglich der Einfallsrichtung des Lasers schräg angeordneten ersten Spiegel (6), einem zur Einfallsrichtung des Lasers rechtwinkligen zweiten Spiegel (7), und einem dritten Spiegel (8), der mit den beiden ersten Spiegeln (6,7) einen Hohlraum bildet.

7. Verfahren nach Anspruch 1, bei welchem der Hohlraum ein herkömmlicher Hohlraum mit zwei Spiegeln ist und zwischen dem Laser und dem Hohlraum ein Polarisations-Isolator angeordnet ist, welcher die Rückkehr einer direkten Reflexion an der Rückseite des Eingangsspiegels zum Laser verhindert und eine Strahlung, die eine Resonanz in dem Hohlraum erfahren hat, an den Laser durchläßt.

8. Verfahren nach Anspruch 1, **dadurch gekennzeichnet, daß** der Laser zur Arbeitsweise in einem einem entarteten Mode benachbarten Mode eingestellt ist, daß die sekundären Transversalmodes sämtlich auf der einen Seite eines entsprechenden Haupt-Transversalmodes gruppiert sind und daß der Laser einen Scan in Richtung ausgehend von der der Seite, auf welcher sich die Sekundärmodes befinden, gegenüberliegenden Seite ausführt.

## Claims

1. A method of gas trace detection by a laser coupled to a resonant optical cavity containing a chemical species to be analyzed, **characterized in that** it includes the steps of:
providing that the coupling between the laser and the cavity is such that the light is only sent back to the laser when the cavity is in a resonance mode and at the resonance frequency;
providing a semiconductor laser of a type adapted to providing an emission amplified and thinned down at the reinjected frequency, and such that, when a current rectangular pulse is applied thereto, its frequency moves from a determined initial frequency to a determined final frequency;
exciting the laser by a first current rectangular pulse so that the laser frequency sequentially locks on successive modes of the cavity;
measuring the fall time of the light intensity in the cavity at the end of said rectangular pulse; and
repeating the steps of excitation and measurement for successive current rectangular pulses, to cover a spectral range to be analyzed.

2. The method of claim 1, **characterized in that** the laser is a laser diode.

3. The method of claim 1, **characterized in that** the laser is excited by sequential current rectangular pulses of increasing intensity.

4. The method of claim 1, **characterized in that** the laser is excited by sequential current rectangular pulses of increasing length.

5. The method of claim 1, **characterized in that** the laser is excited by identical sequential current rectangular pulses, the temperature at which the laser is stabilized being incremented after each rectangular pulse.

6. The method of claim 1, **characterized in that** the cavity is of V-shaped type, comprised of a first mirror (6) oblique with respect to the direction of incidence of the laser, a second mirror (7) orthogonal to the direction of incidence of the laser, and a third mirror (8) forming a cavity with the first two mirrors (6, 7).

7. The method of claim 1, **characterized in that** the cavity is a conventional cavity with two mirrors and a polarizing isolator is arranged between the laser and the cavity to prevent the returning to the laser of a direct reflection on the rear surface of the entrance mirror and to transmit to the laser a radiation having undergone a resonance in the cavity.

8. The method of claim 1, **characterized in that** the cavity is set to operate in a mode close to a degenerated mode, the secondary transverse modes being all gathered on a same side of a main corresponding transverse mode, the laser performing a scanning in the direction starting from the side opposite to that where the secondary lateral modes are found.
